# EUROPEAN PATENT APPLICATION

(11) **EP 3 566 843 A1**
(43) Date of publication of application: **13.11.2019**
(21) Application number: 18171811.5
(22) Date of filing: 11.05.2018
(51) Int. Cl.: B29B 9/06, B29B 9/16, B29C 47/00, F26B 17/00, B01J 2/20

(54) **PROCESS AND DEVICE FOR PREPARING POLYMER PELLETS HAVING DIFFERING COMPOSITIONS**

(71) Applicant: Basell Polyolefine GmbH, 50389 Wesseling (DE)
(72) Inventor: Krümpel, Peter, 65520 Bad Camberg (DE); Damm, Elke, 61118 Bad Vibel (DE); Malucelli, Decio, 44122 Ferrara (IT); Consalvi, Marco, 44122 Ferrara (IT)
(74) Representative: Seelert, Stefan

(57) **Abstract**

A process for preparing polymer pellets having differing compositions comprising forming first polymer pellets having a first pellet composition in a underwater pelletizing unit comprising a cutting chamber (130) filled with process water and separating the first polymer pellets from the process water in a first pellet-water separating unit, i.e. (first) centrifugal drier (135), thereafter disconnecting the first pellet-water separation unit from the underwater pelletizing unit and connecting the underwater pelletizing unit to a second pellet-water separation unit, i.e. (second) centrifugal drier (185), and then forming second polymer pellets having a second pellet composition in the underwater pelletizing unit and separating the second polymer pellets from the process water in the second pellet-water separating unit.

## Description

### FIELD OF THE INVENTION

The present disclosure provides a process for preparing polymer pellets having differing compositions. The present disclosure especially provides a process for preparing polymer pellets having differing compositions in a combination of an extruder device and an underwater pelletizing unit. The present disclosure further provides an apparatus for preparing polymer pellets having differing compositions.

### BACKGROUND OF THE INVENTION

Typically, thermoplastic polymers are distributed in form of polymer pellets. For preparing such pellets, the polymeric material, often in form of a polymer powder or a polymer fluff as obtained in a polymerization reactor, is supplied together with polymer additives to an extruder device, therein molten and homogenized and then formed into pellets. Typical equipment for producing the pellets includes apparatuses having a screw type kneading extruder for plasticizing the thermoplastic, a die plate arranged at the front end of the screw type kneading extruder, and a cutting device for cutting strands extruded from the die plate into small pieces. In underwater pelletizing units, the pellets are directly extruded into water and cut into the pieces within a so-called pelletizing chamber or cutting chamber filled with water. Underwater pelletizing is commonly used for the processing of sticky products and for high throughput rates.

Making colored polymer articles often occurs in a three-step process. In a first step, polymer pellets of natural color are prepared in a polymer production facility from polymer powder or polymer fluff with already adding a suitable combination of polymer additives. In a next step, the pellets are molten again in different equipment and provided with suitable colorants, often in form of a colorant masterbatch, and formed into colored polymer pellets. The final step is then the production of the polymer articles, such as pipes, sheets, films, bottles and the like. In some circumstances, the colorant may be blended with the polymer in the final process step. However, it has to be ensured that the last melting step provides a sufficient homogenization of the colorant.

To minimize the number of process steps, it is possible to add the colorant or the colorants already in the first extrusion step. For example, WO 2009/059967 A2 discloses a method for introducing carbon black into a polymer powder or fluff, in which method polyolefin powder and optional additives are fed to a main extruder and therein combined with a molten or partly molten polyolefin/carbon black composition which has been prepared in a small side extruder of the main extruder. WO 2015/071075 A1 relates to direct feeding of carbon black in the production of black compounds for pipe and wire and cable applications.

However, when producing polymer pellets of differing colors with the same apparatus, there is always a risk of contamination. Thus, such a color change requires a thorough cleaning of the apparatus including the screw type kneading extruder, the die plate, and the cutting device including all equipment for separating the polymer pellets from the process water. Usually, this includes suspending the operation of the pellet manufacturing apparatus. While generally the polymer material left over in the screw type kneading extruder can be removed in a comparatively short time, the elimination of the polymer material of the previous color left over in the pellet treatment section requires a longer time because a part of the equipment has to be dismantled to allow a manual check that all pellets of the previous color have been flushed out. Therefore, the period for halting the manufacturing of pellets may be quite long. When performing the pelletizing directly after the polymerization section, it may even be required to interrupt the polymerization process until the cleaning operations are completed.

One possible alternative for regularly cleaning the whole pelletizing equipment is to install separated extrusion lines, including separated polymer and additives feeding sections, separated extruder devices, separated pellet treatment and separated storage, for example one combination respectively dedicated to handling natural polymer grades and one combination respectively dedicated to handling black-colored polymer grades.

WO 2013/101377 A1 discloses systems and methods for forming different plastic products from a single melt in which a melt of a plastic resin is formed in a main extruder and either directly transformed into polymer pellets or transferred to a secondary extruder, blended with additional colorants or additives and then transformed into polymer pellets.

US 6,019,916 describes a manufacturing method of different color pellets in a manufacturing apparatus which has two pelletizing units attached to one screw kneading extruder. However, the specific parts of this apparatus have a high complexity and are difficult to be applied on an extruder device of an already existing polymerization plants due to the dimensions of the relevant equipment. Furthermore, the presence of process sections where polymer may rest at high temperatures generates a relatively high risk of product degradation and crosslinking.

There is accordingly a need to overcome the disadvantages of the prior art and to provide a process, which does not require to install multiple extrusion equipment but nonetheless allows preparing polymer pellets having differing compositions, such as polymer pellets having differing colors, without the need of stopping the polymerization process and with a small risk of a contamination of polymer pellets of a previously produced color.

### SUMMARY OF THE INVENTION

The present disclosure provides a process for preparing polymer pellets having differing compositions, comprising the steps of,
for a first period of time,
a) supplying a first combination of feed materials comprising a polymer product and one or more additives to an extruder device and forming a first polymer melt having a first melt composition,
b) transferring the first polymer melt into an underwater pelletizing unit, which comprises a cutting chamber and operates with process water flowing in a closed loop, and forming first polymer pellets having a first pellet composition within the cutting chamber filled with process water, wherein a first pellet-water mixture is obtained,
c) transferring the first pellet-water mixture through a first pellet-water transportation pipe into a first pellet-water separating unit and separating the first polymer pellets from the process water,
d) withdrawing the separated first polymer pellets from the first pellet-water separation unit and transferring the first polymer pellets into a first pellet silo, and
e) recycling the separated process water from the first pellet-water separation unit through a first process water transportation pipe to the cutting chamber; and
   thereafter
f) disconnecting the first pellet-water separation unit from the underwater pelletizing unit and connecting the underwater pelletizing unit to a second pellet-water separation unit; and,
   for a second period of time,
g) supplying a second combination of feed materials comprising a polymer product and one or more additives to the extruder device and forming a second polymer melt having a second melt composition which differs from the first melt composition,
h) transferring the second polymer melt into the underwater pelletizing unit and forming second polymer pellets having a second pellet composition within the cutting chamber filled with process water, wherein a second pellet-water mixture is obtained,
i) transferring the second pellet-water mixture through a second pellet-water transportation pipe into a second pellet-water separating unit and separating the second polymer pellets from the process water,
j) withdrawing the separated second polymer pellets from the second pellet-water separation unit and transferring the second polymer pellets to a second pellet silo, and
k) recycling the separated process water from the second pellet-water separation unit through a second process water transportation pipe to the cutting chamber.

In some embodiments, the process is further comprising, after the second period of time, the steps of
I) disconnecting the second pellet-water separation unit from the underwater pelletizing unit and connecting the underwater pelletizing unit to the first pellet-water separation unit; and,
for a third period of time, carrying out steps a) to e) again.

In some embodiments, the process is further comprising, after the second period of time, the steps of
I) disconnecting the second pellet-water separation unit from the underwater pelletizing unit and connecting the underwater pelletizing unit to the first pellet-water separation unit; and
   for a third period of time,
m) supplying a third combination of feed materials comprising a polymer product and one or more additives to an extruder device and forming a third polymer melt having a third melt composition,
n) transferring the third polymer melt into the underwater pelletizing unit and forming third polymer pellets having a third pellet composition within the cutting chamber filled with process water, wherein a third pellet-water mixture is obtained
o) transferring the third pellet-water mixture through the first pellet-water transportation pipe into the first separating unit and separating the third polymer pellets from the process water,
p) withdrawing the separated third polymer pellets from the first separation unit and transferring the third polymer pellets into the first pellet silo or into a third pellet silo, and
q) recycling the separated process water from the first separation unit through the first process water transportation pipe to the cutting chamber.

In some embodiments, the process is further comprising either, for an intermediate period of time after the first period of time and before carrying out step f), the steps of
a') supplying the second combination of feed materials comprising a polymer product and one or more additives or an intermediate combination of feed materials comprising a polymer product and one or more additives to the extruder device and forming a transition polymer melt having a transition melt composition,
b') transferring the transition polymer melt into the underwater pelletizing unit and forming transition polymer pellets having a transition pellet composition within the cutting chamber filled with process water, wherein a transition pellet-water mixture is obtained,
c') transferring the transition pellet-water mixture through the first pellet-water transportation pipe into the first separating unit and separating the transition polymer pellets from the process water,
d') withdrawing the separated transition polymer pellets from the first separation unit and transferring the transition polymer pellets into a transition pellet silo, and
e') recycling the separated process water from the first separation unit through the first process water transportation pipe to the cutting chamber; or
comprising, after carrying out step f), for an intermediate period of time before the second period of time, the steps of,
g') supplying the second combination of feed materials comprising a polymer product and one or more additives or an intermediate combination of feed materials comprising a polymer product and one or more additives to the extruder device and forming a transition polymer melt having a transition melt composition,
h') transferring the transition polymer melt into the underwater pelletizing unit and forming transition polymer pellets having a transition pellet composition within the cutting chamber filled with process water, wherein a transition pellet-water mixture is obtained,
i') transferring the transition pellet-water mixture through the second pellet-water transportation pipe into the second separating unit and separating the transition polymer pellets from the process water,
j') withdrawing the separated transition polymer pellets from the second separation unit and transferring the transition polymer pellets to a transition pellet silo, and
k') recycling the separated process water from the second separation unit through the second process water transportation pipe to the cutting chamber.

In some embodiments, the first pellet-water transportation pipe and the first process water transportation pipe are permanently attached to the underwater pelletizing unit and to the first pellet-water separation unit and the second pellet-water transportation pipe and the second process water transportation pipe are permanently attached to the underwater pelletizing unit and to the second pellet-water separation unit and

the disconnecting of the first pellet-water separation unit from the underwater pelletizing unit and the connecting of the underwater pelletizing unit to the second pellet-water separation unit or the disconnecting of the first pellet-water separation from the underwater pelletizing unit and the connecting of the underwater pelletizing unit to the second pellet-water separation unit and the disconnecting of the second pellet-water separation unit from the underwater pelletizing unit and the connecting of the underwater pelletizing unit to the first pellet-water separation unit occur by actuating two or more valves installed in or installed attached to the pellet-water and process water transportation pipes.

In some embodiments, the underwater pelletizing unit has one outlet for a pellet-water mixture and one inlet for process water and the valves are three-way valves and the first pellet-water transportation pipe and the second pellet-water transportation pipe are attached to a first three-way valve which is connected via a third pellet-water transportation pipe with the pellet-water mixture outlet of the underwater pelletizing unit and the first process water transportation pipe and the second process water transportation pipe are attached to a second three-way valve which is connected via a third process water transportation pipe with the process water inlet of the underwater pelletizing unit and

the connecting of the underwater pelletizing unit to and the disconnecting of the first and the second pellet-water separation unit from the underwater pelletizing unit occur by actuating the first and the second three-way valves.

In some embodiments, at least one of the additives comprised in the first combination of feed materials and/or in the second combination of feed materials is a colorant and the polymer pellets having differing compositions are polymer pellets having different colors.

In some embodiments, one of the additives comprised in the first combination of feed materials and/or in the second combination of feed materials is carbon black or a composition comprising carbon black and the carbon black or the composition comprising carbon black is either comprised in the first combination of feed materials or in the second combination of feed materials.

In some embodiments, the combinations of feed materials comprising a polymer product and one or more additives, which are supplied to the extruder device, are first supplied to a mixing device and mixtures of the feed materials are supplied to the extruder device.

In some embodiments, the polymer product is a polyolefin prepared by homopolymerizing a C₂-C₁₀-1-alkene or by copolymerizing two or more C₂-C₁₀-1-alkenes.

In some embodiments, the present disclosure provides an apparatus for preparing polymer pellets having differing compositions, comprising
i) an extruder device for forming a polymer melt;
ii) an underwater pelletizing unit for forming polymer pellets within a cutting chamber filled with process water;
iii) two separating units for separating polymer pellets from process water;
iv) two pellet silos for holding polymer pellets, wherein a first of the pellet silos is connected to a first pellet-water separating unit and holds polymer pellets separated from process water in the first pellet-water separating unit and a second of the pellet silos is connected to a second pellet-water separating unit and holds polymer pellets separated from process water in the second pellet-water separating unit;
v) two process water circulation lines for circulating process water in combination with polymer pellets from the cutting chamber to the two pellet-water separating units and recycling the process water from the two pellet-water separating units to the cutting chamber; and
vi) a valve system for controlling the flow of the process water through the two process water circulation lines in a way that the pellet-water mixture withdrawn from the cutting chamber is either directed to the first pellet-water separating unit and the process water is then recycled from the first pellet-water separating unit to the cutting chamber or the pellet-water mixture withdrawn from the cutting chamber is directed to the second pellet-water separating unit and the process water is recycled from the second pellet-water separating unit to the cutting chamber.

In some embodiments, the apparatus is further comprising vii) a transition pellet silo for holding transition pellets which is equipped with a conveying system for recycling the transition pellets withdrawn from the transition pellet silo to the extruder device.

In some embodiments, the valve system comprises a first three-way valve attached to a first pellet-water transportation pipe for transferring the pellet-water mixture to the first pellet-water separating unit and attached to a second pellet-water transportation pipe for transferring the pellet-water mixture to the second pellet-water separating unit, wherein the first three-way valve is further attached to third pellet-water transportation pipe for withdrawing the pellet-water mixture from the cutting chamber, and the valve system comprises a second three-way valve attached to a first process water transportation pipe for recycling process water from the first pellet-water separating unit and attached to a second process water transportation pipe for recycling process water from the second pellet-water separating unit, wherein the second three-way valve is further attached to a third process water transportation pipe for recycling process water to the cutting chamber.

In some embodiments, the present disclosure provides a process for transitioning from preparing polymer pellets having a first pellet composition from a first combination of feed materials to preparing polymer pellets having a second pellet composition from a second combination of feed materials in the apparatus of claims 11 to 13 comprising changing the supply of feed materials from supplying the first combination of feed materials to supplying the first combination of feed materials to the extruder device and changing the flow of the process water in a way that the pellet-water mixture withdrawn from the cutting chamber, which had been directed to a first pellet-water separating unit for preparing the polymer pellets having the first pellet composition, is directed to the second pellet-water separating unit.

In some embodiments, the present disclosure provides a process for the preparation of polyolefins by polymerizing one or more olefins in a polymerization reactor, supplying the obtained polyolefin product together with one or more additives to the apparatus of claims 11 to 13 and forming polyolefins pellets.

### BRIEF DESCRIPTION OF THE DRAWINGS

Figure 1 shows schematically a set-up for preparing polymer pellets having differing compositions according to a process of the prior art.
Figure 2 shows schematically a set-up for preparing polymer pellets having differing compositions according to the process of the present disclosure.

### DETAILED DESCRIPTION OF THE INVENTION

The present disclosure provides a process for preparing polymer pellets having differing compositions. The process of the present disclosure is characterized in that, for a first period of time, first polymer pellets having a first pellet composition are prepared in steps a) to e), and thereafter, for a second period of time, second polymer pellets having a second pellet composition are prepared in steps g) to k). In a preferred embodiment of the present disclosure, thereafter, first polymer pellets having the first pellet composition are prepared again by carrying out steps a) to e) for a third period of time. In another preferred embodiment of the present disclosure, third polymer pellets having a third pellet composition are prepared in steps m) to q) for a third period of time after the second period of time.

In step a) of the process of the present disclosure, a first combination of feed materials comprising a polymer product and one or more additives is supplied to an extruder device and a first polymer melt having a first melt composition is formed.

Suitable extruder devices for the process of the present disclosure are extruders or continuous mixers. These extruders or mixers can be single- or two-stage machines which melt and homogenize the combination of feed materials. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating twin rotor or the extruder device comprises at least one co-rotating twin screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan.

The first combination of feed materials supplied to the extruder device comprises a polymer product. Suitable polymer products include polyolefins such as polyethylenes, polypropylenes or polybutene, styrenic polymers such as polystyrenes, acrylonitrile butadiene styrenes (ABS) or styrene-butadiene copolymers, polyamides, polyesters such as polyethylene terephthalates (PET) or polybutylene terephthalates (PBT), polycarbonates, polyacrylates such as polymethyl methacrylates (PMMA), polyether sulfones (PES), polyether ketones, or polyether sulfides (PES), or mixtures thereof.

In a preferred embodiment of the present disclosure, the polymer product is a polyolefin prepared by homopolymerizing a C₂-C₁₀-1-alkene or by copolymerizing two or more C₂-C₁₀-1-alkenes. Preferably, the polymer product is an ethylene, propylene or 1-butene homopolymer or copolymer. Preferred comonomers in propylene polymerization are up to 40 wt.% of ethylene, 1-butene and/or 1-hexene, and preferably from 0.5 wt.% to 35 wt.% of ethylene, 1-butene and/or 1-hexene. Preferred comonomers in ethylene polymerization are up to 40 wt.% of C₃-C₈-1-alkenes, preferably 1-butene, 1-pentene, 1-hexene, 1-octene, or mixtures thereof. Particular preference is given to polymer products which have been obtained by copolymerizing ethylene with from 0.01 wt.% to 20 wt.%, more preferably from 0.05 wt.% to 12 wt.% of one or more C₃-C₈-1-alkenes. Especially preferred comonomers for the copolymerization of ethylene are 1-hexene and/or 1-butene.

The first combination of feed materials supplied to the extruder device further comprises one or more additives. Such additives are common in the art. Suitable types of additives are, for example, antioxidants, melt stabilizers, light stabilizers, acid scavengers, lubricants, processing aids, antiblocking agents, slip agents, antistatics agents, antifogging agents, pigments or dyes, nucleating agents, flame retardants or fillers. It is common that several additives are added to the polyolefin compositions. The multiple additives can be different types of additives. It is however also possible that several representatives of one type of additives are added to one polyolefin composition. Additives of all these types are generally commercially available and are described, for example, in Hans Zweifel, Plastics Additives Handbook, 5th Edition, Munich, 2001.

In a preferred embodiment of the present disclosure, at least one of the additives is a colorant. Colorants are substances that are added to the polymer product in order to change the color of the material. Suitable colorants can be inorganic or organic pigments or the colorants are polymer-soluble organic colorants. The colorants can be added to the extruder in neat form or premixed with further additives or components as mixture, concentrate or masterbatch. The additives or additive concentrates or masterbatches can be added to the extruder in solid form as powder or in form of pellets or it is possible to add some or all colorant in liquid form. If the colorant or a mixture of colorants is added in form of a masterbatch, the carrier material for the masterbatch is preferably compatible with the polymer product to be colored.

According to an especially preferred embodiment of the present disclosure, one of the additives is carbon black or a composition comprising carbon black. The term carbon black designates a family of finely divided carbon pigments produced by incomplete combustion or thermal decomposition of hydrocarbons which have a high surface-area-to-volume ratio. Examples of carbon black are furnace black or acetylene black. In a preferred embodiment, the carbon black has particle sizes in the range from 5 nm to 500 nm, more preferably from 15 nm to 60 nm and most preferably of not more than 25 nm. Carbon black may be employed to provide UV resistance and weatherability to thereof produced articles or to ensure performance of certified products such as regulated pressure pipes. The amount of carbon black in the prepared polymer pellets is preferably from 0.1 to 12 wt.%, more preferably from 0.5 to 5 wt.%, even more preferably from 2 to 3 wt.%, and especially from 2.1 to 2.5 wt.%. The carbon black additive comprised in the combination of feed materials supplied to the extruder device may be neat carbon black or a mixture comprising neat carbon black, where the neat carbon black can be carbon black powder or pelletized carbon black and is preferably carbon black powder, or the carbon black additive is a carbon black masterbatch.

In a preferred embodiment of the present disclosure, at least one of the additives comprised in the first combination of feed materials and/or in the second combination of feed materials is a colorant and the polymer pellets having differing compositions are polymer pellets having different colors. Preferably, at least one colorant is carbon black or a composition comprising carbon black and the carbon black or the composition comprising carbon black is either comprised in the first combination of feed materials or in the second combination of feed materials. When the polymer pellets resulting from the different combinations of feed materials have different colors, in a preferred embodiment, one of these colors is the natural color of the polymer product, i.e. no colorant additives were added. In an especially preferred embodiment of the present disclosure, some of the prepared polymer pellets are uncolored polymer pellets and other prepared polymer pellets are black polymer pellets, preferably colored by carbon black. In another especially preferred embodiment of the present disclosure, some of the prepared polymer pellets are black polymer pellets and other prepared polymer pellets are colored polymer pellets of a color which is different from black, for example blue.

In the process of the present disclosure, the extruder device serves for melting the polyolefin powder, homogenizing the polyolefin melt as such and uniformly distributing the additives within the polyolefin melt. This occurs preferably by applying heat and mechanical energy to the mixture of polyolefin powder and additives. In step a) of the process of the present disclosure, a first polymer melt having a first melt composition is formed from the first combination of feed materials supplied to the extruder device.

In the process of the present disclosure, the extruder device is equipped with an underwater pelletizing unit for forming polymer pellets within a cutting chamber filled with process water. Step b) of the process of the present disclosure accordingly provides that the first polymer melt is transferred into the underwater pelletizing unit, preferably through a die plate. The emerging strands are preferably cut into pieces by rotating knives, so forming first polymer pellets having a first pellet composition within the cutting chamber and resulting in a first pellet-water mixture. The process water in the cutting chamber has preferably a temperature from 10 to 90°C, more preferably a temperature from 40 to 80°C, and especially a temperature from 50 to 70°C.

For separating the first polymer pellets from the process water, the first pellet-water mixture obtained in the cutting chamber is transferred through a first pellet-water transportation pipe into a first pellet-water separating unit in step c). The first pellet-water separating unit is preferably a centrifugal dryer, wherein the process water is removed by a centrifugal force. Preferably, the centrifugal dryer comprises a mechanical agitator that has rotor lifter blades, which are designed and configured to lift the pellets upwards, preferably in a helical movement. Preferably, a screen is provided that prevents that pellets are removed with the process water, in particular a screen that is a sieve, preferably a metal sieve, or a punched metal plate or sheet. The first pellet-water separating unit provides first polymer pellets which are separated from the process water.

The first polymer pellets separated from the process water are withdrawn in step d) from the first pellet-water separation unit and transferred into a first pellet silo which is preferably a homogenizing silo. The transfer preferably occurs by pneumatic transportation using compressed air.

In order to have a closed loop of the process water, in step e), the process water separated from the first polymer pellets is recycled from the first pellet-water separation unit through a first process water transportation pipe to the cutting chamber. The process water separated from the first polymer pellets is preferably first collected in a water tank and then recycled to the cutting chamber by a pump through the first process water transportation pipe. For controlling the temperature of the process water, the process water is preferably first passed through a heat exchanger before being transferred into the cutting chamber.

After having operated steps a) to e) for a first period of time in which first polymer pellets having a first pellet composition are prepared, in step f), the first pellet-water separation unit is disconnected from the underwater pelletizing unit and the underwater pelletizing unit is connected to a second pellet-water separation unit for preparing in steps g) to k) second polymer pellets having a second pellet composition for a second period of time.

The disconnecting of the first pellet-water separation unit from the underwater pelletizing unit and the connecting of the underwater pelletizing to the second pellet-water separation unit may occur by interrupting the pelletizing process, physically removing the first pellet-water transportation pipe and the first process water transportation pipe, which connect the cutting chamber and the first pellet-water separation unit, from the cutting chamber and attaching a second pellet-water transportation pipe and a second process water transportation pipe, which connect the cutting chamber and a second pellet-water separation unit, to the cutting chamber. Preferably, the first pellet-water transportation pipe and the first process water transportation pipe are permanently attached to the underwater pelletizing unit and to the first pellet-water separation unit and the second pellet-water transportation pipe and the second process water transportation pipe are permanently attached to the underwater pelletizing unit and to the second pellet-water separation unit; and the disconnecting of the first pellet-water separation unit from the underwater pelletizing unit and the connecting of the underwater pelletizing unit to the second pellet-water separation unit or the disconnecting of the first pellet-water separation from the underwater pelletizing unit and the connecting of the underwater pelletizing unit to the second pellet-water separation unit and the disconnecting of the second pellet-water separation unit from the underwater pelletizing unit and the connecting of the underwater pelletizing unit to the first pellet-water separation unit occur by actuating two or more valves installed in or in-stalled attached to the pellet-water and process water transportation pipes.

In an especially preferred embodiment of the present disclosure, the underwater pelletizing unit has one outlet for a pellet-water mixture and one inlet for process water and the valves are three-way valves and the first pellet-water transportation pipe and the second pellet-water transportation pipe are attached to a first three-way valve which is connected via a third pellet-water transportation pipe with the pellet-water mixture outlet of the underwater pelletizing unit and the first process water transportation pipe and the second process water transportation pipe are attached to a second three-way valve which is connected via a third process water transportation pipe with the process water inlet of the underwater pelletizing unit and the connecting of the underwater pelletizing unit to and the disconnecting of the first and the second pellet-water separation unit from the underwater pelletizing unit occur by actuating the first and the second three-way valves.

After having carried out step f), in step g) of the process of the present disclosure, a second combination of feed materials comprising a polymer product and one or more additives is supplied to the extruder device and a second polymer melt having a second melt composition which differs from the first melt composition is formed.

Step h) provides that the second polymer melt is transferred into the underwater pelletizing unit, preferably through a die plate. The emerging strands are preferably cut into pieces, so forming second polymer pellets having a second pellet composition within the cutting chamber and resulting in a second pellet-water mixture. The process water in the cutting chamber has preferably a temperature from 10 to 90°C, more preferably a temperature from 40 to 80°C, and especially a temperature from 50 to 70°C.

For separating the second polymer pellets from the process water, the second pellet-water mixture obtained in the cutting chamber is transferred through a second pellet-water transportation pipe into a second pellet-water separating unit in step i). The second pellet-water separating unit is preferably a centrifugal dryer, wherein the process water is removed by a centrifugal force. Preferably, the centrifugal dryer comprises a mechanical agitator that has rotor lifter blades, which are designed and configured to lift the pellets upwards, preferably in a helical movement. Preferably, a screen is provided that prevents that pellets are removed with the process water, in particular a screen that is a sieve, preferably a metal sieve, or a punched metal plate or sheet. The second pellet-water separating unit provides second polymer pellets which are separated from the process water.

The second polymer pellets separated from the process water are withdrawn in step j) from the second pellet-water separation unit and transferred into a second pellet silo which is preferably a homogenizing silo. The transfer preferably occurs by pneumatic transportation using compressed air.

In order to have a closed loop of the process water, in step k), the process water separated from the second polymer pellets is recycled from the second pellet-water separation unit through a second process water transportation pipe to the cutting chamber. The process water separated from the second polymer pellets is preferably first collected in a water tank and then recycled to the cutting chamber by a pump through the second process water transportation pipe. For controlling the temperature of the process water, the process water is preferably first passed through a heat exchanger before being transferred into the cutting chamber.

In a preferred embodiment of the present disclosure, after having operated steps g) to k) for a second period of time in which second polymer pellets having a second pellet composition are prepared, in step I), the second pellet-water separation unit is disconnected from the underwater pelletizing unit and the underwater pelletizing unit is connected to the first pellet-water separation unit and, for preparing first polymer pellets having a first pellet composition, steps a) to e) are carried out again for a third period of time. The connecting and disconnecting of step I) is preferably carried out in an analogous manner as the connecting and disconnecting of step f).

In another preferred embodiment of the present disclosure, after having operated steps g) to k) for a second period of time in which second polymer pellets having a second pellet composition are prepared, in step I), the second pellet-water separation unit is disconnected from the underwater pelletizing unit and the underwater pelletizing unit is connected to the first pellet-water separation unit and, for preparing third polymer pellets having a third pellet composition, steps m) to q) are carried out for a third period of time. The connecting and disconnecting of step I) is preferably carried out in an analogous manner as the connecting and disconnecting of step f).

After having carried out step I), in step m), a third combination of feed materials comprising a polymer product and one or more additives are supplied to the extruder device and a third polymer melt having a third melt composition which differs from the first melt composition and which differs from the second melt composition is formed.

Step n) provides that the third polymer melt is transferred into the underwater pelletizing unit, preferably through a die plate. The emerging strands are preferably cut into pieces, so forming third polymer pellets having a third pellet composition within the cutting chamber and resulting in a third pellet-water mixture. The process water in the cutting chamber has preferably a temperature from 10 to 90°C, more preferably a temperature from 40 to 80°C, and especially a temperature from 50 to 70°C.

For separating the third polymer pellets from the process water, the third pellet-water mixture obtained in the cutting chamber is transferred in step o) through the first pellet-water transportation pipe into the first pellet-water separating unit. Step o) provides third polymer pellets which are separated from the process water.

The third polymer pellets separated from the process water are withdrawn in step p) from the first pellet-water separation unit and transferred into the first pellet silo, or into a third pellet silo which is preferably a homogenizing silo. The transfer preferably occurs by pneumatic transportation using compressed air.

In order to have a closed loop of the process water, in step q), the process water separated from the third polymer pellets is recycled from the first pellet-water separation unit through the first process water transportation pipe to the cutting chamber. The process water separated from the third polymer pellets is preferably first collected in a water tank and then recycled to the cutting chamber by a pump through the first process water transportation pipe. For controlling the temperature of the process water, the process water is preferably first passed through a heat exchanger before being transferred into the cutting chamber.

In the process of the present disclosure, the first pellet composition, the second pellet composition and, if prepared, the third pellet composition preferably differ in that different chemical compounds are employed as additives in the respective pellet compositions. More preferably, the respective pellet compositions differ by comprising different colorants as additive. In a preferred embodiment of the present disclosure, the first pellet composition, the second pellet composition and, if prepared, the third pellet composition comprise the same polymer product. In another preferred embodiment, the first pellet composition, the second pellet composition and, if prepared, the third pellet composition comprise different polymer products, more preferably comprise different polymer products and different additives.

In a preferred embodiment of the present disclosure, transition polymer pellets are prepared for an intermediate period of time either in steps a') to e') after the first period of time and before carrying out step f); or in steps g') to k') after carrying out step f) before the second period of time.

When the transition polymer pellets are prepared before carrying out step f), after the first period of time, the second combination of feed materials or the intermediate combination of feed materials is supplied to the extruder device and a transition polymer melt having a transition melt composition is formed in step a'). Step b') provides that the transition polymer melt is transferred into the underwater pelletizing unit and transition polymer pellets having a transition pellet composition are formed within the cutting chamber resulting in a transition pellet-water mixture. The transition pellet-water mixture is transferring through the first pellet-water transportation pipe into the first separating unit and the transition polymer pellets are separated from the process water in step c'). In step d'), the separated transition polymer pellets are withdrawn from the first separation unit and transferred into a transition pellet silo which is preferably a homogenizing silo; and, in step e'), the separated process water is recycled from the first separation unit through the first process water transportation pipe to the cutting chamber.

When the transition polymer pellets are prepared after carrying out step f), before the second period of time, the second combination of feed materials or the intermediate combination of feed materials is supplied to the extruder device and a transition polymer melt having a transition melt composition is formed in step g'). Step h') provides that the transition polymer melt is transferred into the underwater pelletizing unit and transition polymer pellets having a transition pellet composition are formed within the cutting chamber resulting in a transition pellet-water mixture. The transition pellet-water mixture is transferring through the second pellet-water transportation pipe into the second separating unit and the transition polymer pellets are separated from the process water in step i'). In step j'), the separated transition polymer pellets are withdrawn from the second separation unit and transferred into a transition pellet silo which is preferably a homogenizing silo; and, in step k'), the separated process water is recycled from the first separation unit through the first process water transportation pipe to the cutting chamber.

Preferably, the transition pellet silo is arranged in parallel to either the first pellet silo or the second pellet silo and it is preferably possible by just actuating a suitable valve or valve combination such as a three-way valve to direct the polymer pellets either to the first or the second pellet silo or to the transition pellet silo.

In a preferred embodiment of the present disclosure, the transition material collected as transition polymer pellets in the transition pellet silo is reworked into prime grade. For this purpose, the transition polymer pellets are preferably fed in a small proportion together with fresh polymer product to the extruder device in the preparation of polymer pellets which have a suited pellet composition. When, for example, one variety of the polymer pellets having differing compositions are colored polymer pellets such as black polymer pellets colored by carbon black, and the differing polymer pellets are natural color polymer pellets prepared from the same polymer product, the transition polymer pellets, which differ from the colored polymer pellets by an reduced amount of colorant, are preferably added in a small proportion in the preparation of the colored polymer pellets and not in the preparation of the natural color polymer pellets.

When the first combination of feed materials differs from the second combination of feed materials only in the additives, such as colorants, that means when the first combination of feed materials and the second combination of feed materials comprise the same polymer product, preferably the second combination of feed materials is supplied in step a') for the intermediate period of time after the first period of time and before carrying out step f) or is supplied in step g') for the intermediate period of time after carrying out step f) and before the second period of time.

When the first combination of feed materials differs from the second combination of feed materials not only in the additives, such as colorants, but also in the polymer product, in a preferred embodiment, the change from the first combination of feed materials to the second combination of feed materials occurs via an intermediated combination of feed materials. Preferably, the change of additives and the change of polymer product does not occur at the same time but one after the other in an appropriate order with producing transition polymer pellets in the time period between the two changes. Preferably, the order of changes allows an easy reworking of the transition polymer pellets into a prime grade. When, for example, one variety of the polymer pellets having differing compositions are colored polymer pellets such as black polymer pellets colored by carbon black made from one polymer product, and the differing polymer pellets are natural color polymer pellets prepared from another polymer product, the transition polymer pellets, which have a reduced amount of colorant with respect to the colored polymer pellets, are preferably produced from the same polymer product as the colored polymer pellets, thus allowing to add small proportions of the transition polymer pellets in the preparation of the colored polymer pellets without decreasing the properties of the colored polymer pellets.

In a preferred embodiment of the process of the present disclosure, the combinations of feed materials comprising a polymer product and one or more additives, which are supplied to the extruder device, are first supplied to a mixing device and mixtures of the feed materials are supplied to the extruder device. The mixing device can be any apparatus which allows dry-blending of particles. The mixing device can operate continuously or discontinuously. Preferably, the mixing device operates continuously.

Preferred dry-blending devices are paddle mixers comprising one or two horizontally orientated rotating shafts, more preferably two horizontally orientated counter-rotating shafts. The shafts are equipped with paddles of an appropriate geometry. The rotating shafts move the composition of polyolefin powder and additives horizontally along the axis of the shafts and at the same time mix the composition intensively. Such paddle mixers are commercially available, for example, from Kollemann GmbH, Adenau, Germany or J. Engelsmann AG, Ludwigshafen, Germany. Preferred mixing devices are further vertical batch mixer such a Henschel-Mixers® available from Zeppelin Systems GmbH, Kassel, Germany. Preferred dry-blending devices are also single screw conveyors equipped with blending elements. Preferably, such blending elements are amendable devices such as adjustable paddles or slotted flights to allow controlling the level of blending.

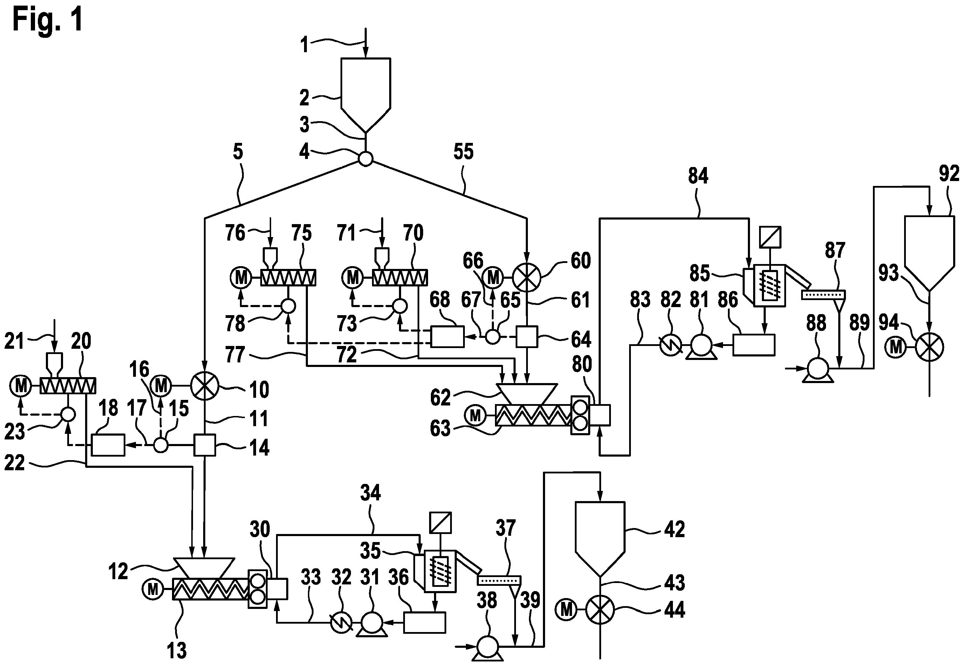

Figure 1 shows schematically a set-up for preparing polymer pellets having differing compositions according to the prior art.

A polymer product, preferably in powder form, is provided via line (1) into a polymer feeding vessel (2). The polymer product is withdrawn from the bottom of polymer feeding vessel (2) via line (3) and directed by valve (4) either via line (5) to an extrusion section for producing natural color polymer pellets or via line (55) to an extrusion section for producing black polymer pellets.

For producing the natural color polymer pellets, the polymer product is conveyed through line (5) to a rotary valve (10) which is operated by a motor M and then further transferred by gravity via line (11) to a hopper (12) of an extruder device (13) which is also operated by a motor M. On the way from rotary valve (10) to hopper (12), the polyolefin powder passes a solid flow meter (14) which measures the flow rate of the polymer product to hopper (12), that means measures the amount of polymer product delivered to hopper (12) per time unit. Solid flow meter (14) is equipped with a controller (15) which on the one hand sends a signal (16) to motor M of rotary valve (10) for adjusting the flow rate of the polymer product if the flow rate measured by solid flow meter (14) differs from the targeted set point of the flow rate previously implemented in controller (15). On the other hand, controller (15) also sends a signal (17), which is indicative of the flow rate of polymer product from the polymer feeding vessel (2) to the hopper (12), to a computing unit (18).

Figure 1 further shows one dosing device (20) for feeding additives in particulate form to hopper (12). It is however also possible to operate the process shown in Figure 1 with two or three or more of these additive feeding units. In each unit, an additive or an additive mixture is provided via a line (21) to a dosing device (20) being operated by a motor M. Dosing devices (20) are capable of weighing the amount of the additive or additive mixture dosed into line (22) through which the additives are supplied to hopper (12). Each dosing device (20) is equipped with a controller (23). The one or more controllers (23) receive signals which are indicative of the amounts of additive dosed by the respective dosing devices (20) into the respective lines (22). The set points for the amounts of additives to be dosed are continuously calculated by computing unit (18) based on signal (17), which is indicative of the flow rate of polymer product from the polymer feeding vessel (2) to the hopper (12), and based on a recipe for the pellet composition which recipe was previously implemented in computing unit (18).

The amounts of polymer product and additives fed into the hopper (12) are transferred into the extruder device (13) and therein molten and homogenized. The melt is conveyed to a cutting chamber (30) in which the polymer pellets are formed. The cutting chamber (30) is filled with process water which is provided by a pump (31), passed through a heat exchanger (32) and then transferred into the cutting chamber (30) via a water transportation pipe (33). The pellet-water mixture obtained within the cutting chamber (30) is withdrawn from the cutting chamber (30) and transferred via a pellet-water transportation pipe (34) to a centrifugal drier (35) in which the polymer pellets are separated from the process water. The separated process water is collected in a water tank (36) and then recycled to the cutting chamber (30) by pump (31) via the water transportation pipe (33).

The separated dry polymer pellets are sieved within a classifying screen (37) to remove small pellets and agglomerates, and are then conveyed by air, which has been compressed by compressor (38), through a pneumatic transport line (39) into a pellet silo (42). The polymer pellets can then be withdrawn from the bottom of the pellet silo (42) via a line (43) and a rotary feeder (44) to a packaging section (not shown) for natural grades.

For producing the black polymer pellets, the polymer product is conveyed through line (55) to a rotary valve (60) which is operated by a motor M and then further transferred by gravity via line (61) to hopper (62) of an extruder device (63) which is also operated by a motor M. On the way from rotary valve (60) to hopper (62), the polyolefin powder passes a solid flow meter (64) which measures the flow rate of the polymer product to hopper (62), that means measures the amount of polymer product delivered to hopper (62) per time unit. Solid flow meter (64) is equipped with a controller (65) which on the one hand sends a signal (66) to motor M of rotary valve (60) for adjusting the flow rate of the polymer product if the flow rate measured by solid flow meter (64) differs from the targeted set point of the flow rate previously implemented in controller (65). On the other hand, controller (65) also sends a signal (67), which is indicative of the flow rate of polymer product from the polymer feeding vessel (2) to the hopper (62), to a computing unit (68).

Figure 1 shows a dosing device (75) for feeding a carbon black masterbatch to hopper (62) and further shows one dosing device (70) for feeding additives in particulate form to hopper (62). It is however also possible to operate the process shown in Figure 1 with two or three or more additive feeding units. In each additive feeding unit, an additive or an additive mixture is provided via a line (71) to a dosing device (70) being operated by a motor M. In the carbon black masterbatch feeding unit, the carbon black masterbatch is provided via a line (76) to a dosing device (75) also being operated by a motor M. Dosing devices (70) are capable of weighing the amount of the additive or additive mixture dosed into line (72) through which the additives are supplied to hopper (62). Dosing device (75) is capable of weighing the amount of carbon black masterbatch dosed into line (77) through which the carbon black masterbatch is supplied to hopper (62). Each dosing device (70) is equipped with a controller (73) and dosing device (75) is equipped with a controller (78). The one or more controllers (73) receive signals which are indicative of the amounts of additive dosed by the respective dosing devices (70) into the respective lines (72) and the controller (78) receive a signal which is indicative of the amount of carbon black masterbatch dosed by the dosing device (75) into line (77).

The set points for the amounts of additives and carbon black masterbatch to be dosed are continuously calculated by computing unit (68) based on signal (67), which is indicative of the flow rate of polymer product from the polymer feeding vessel (2) to the hopper (62), and based on a recipe for the pellet composition which recipe was previously implemented in computing unit (68).

The amounts of polymer product, additives and carbon black masterbatch fed into the hopper (62) are transferred into the extruder device (63) and therein molten and homogenized. The melt is conveyed to a cutting chamber (80) in which the polymer pellets are formed. The cutting chamber (80) is filled with process water which is provided by a pump (81), passed through a heat exchanger (82) and then transferred into the cutting chamber (80) via a water transportation pipe (83). The pellet-water mixture obtained within the cutting chamber (80) is withdrawn from the cutting chamber (80) and transferred via a pellet-water transportation pipe (84) to a centrifugal drier (85) in which the polymer pellets are separated from the process water. The separated process water is collected in a water tank (86) and then recycled to the cutting chamber (80) by pump (81) via the water transportation pipe (83).

The separated dry polymer pellets are sieved within a classifying screen (87) to remove small pellets and agglomerates, and are then conveyed by air, which has been compressed by compressor (88), through a pneumatic transport line (89) into a pellet silo (92). The polymer pellets can then be withdrawn from the bottom of pellet silo (92) via a line (93) and a rotary feeder (94) to a packaging section (not shown) for black grades.

Thus, the set-up shown in Figure 1 requires the installation of two extruder devices (13) and (63) and two sets of feedings units which are however only operated alternately.

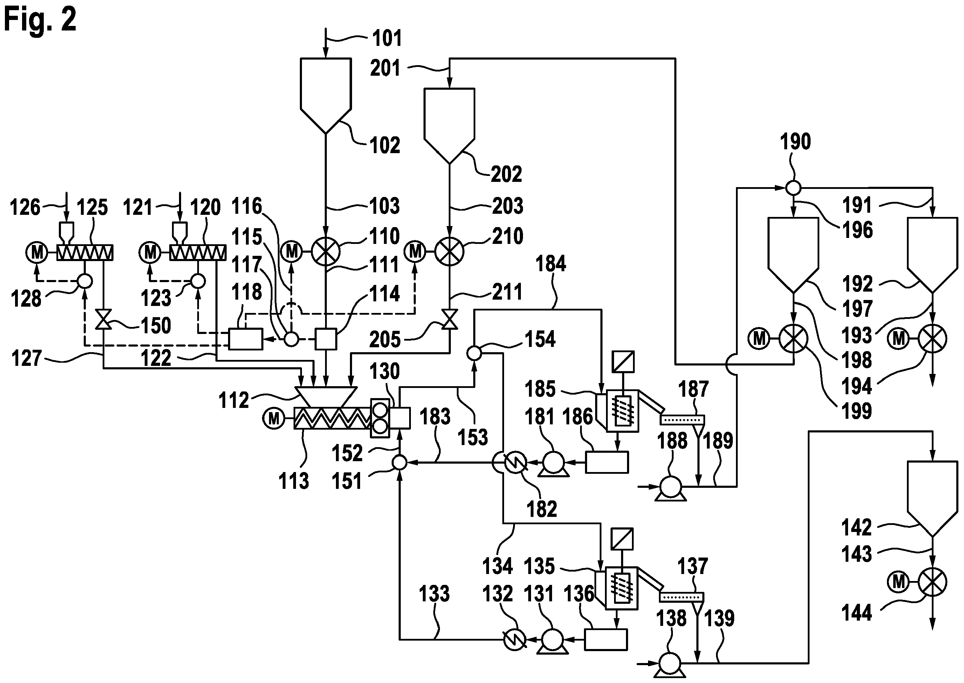

Figure 2 shows schematically a set-up for preparing polymer pellets having differing compositions according to the present disclosure.

A polymer product, preferably in powder form, is provided via line (101) into a polymer feeding vessel (102). The polymer product is withdrawn from the bottom of polymer feeding vessel (102) and conveyed through line (103) to a rotary valve (110) which is operated by a motor M and then further transferred by gravity via line (111) to hopper (112) of an extruder device (113) which is also operated by a motor M. On the way from rotary valve (110) to hopper (112), the polyolefin powder passes a solid flow meter (114) which measures the flow rate of the polymer product to hopper (112). Solid flow meter (114) is equipped with a controller (115) which on the one hand sends a signal (116) to motor M of rotary valve (110) for adjusting the flow rate of the polymer product if the flow rate measured by solid flow meter (114) differs from the targeted set point of the flow rate previously implemented in controller (115). On the other hand, controller (115) also sends a signal (117), which is indicative of the flow rate of polymer product from the polymer feeding vessel (102) to the hopper (112), to a computing unit (118).

Figure 2 shows a dosing device (125) for feeding a carbon black masterbatch to hopper (112) and further shows a dosing device (120) for feeding additives in particulate form to hopper (112). It is however also possible to operate the process shown in Figure 2 with two or three or more additive feeding units. In each additive feeding unit, an additive or an additive mixture is provided via a line (121) to a dosing device (120) being operated by a motor M; and in the carbon black masterbatch feeding unit, the carbon black masterbatch is provided via a line (126) to a dosing device (125) also being operated by a motor M. Dosing devices (120) are capable of weighing the amount of the additive or additive mixture dosed into line (122) through which the additives are supplied to hopper (112). Dosing device (125) is capable of weighing the amount of carbon black masterbatch dosed into line (127) through which the carbon black masterbatch is supplied to hopper (112). Each dosing device (120) is equipped with a controller (123) and dosing device (125) is equipped with a controller (128). The one or more controllers (123) receive signals which are indicative of the amounts of additive dosed by the respective dosing devices (120) into the respective lines (122) and the controller (128) receive a signal which is indicative of the amount of carbon black masterbatch dosed by the dosing device (125) into line (127).

The set points for the amounts of additives and carbon black masterbatch to be dosed are continuously calculated by computing unit (118) based on signal (117), which is indicative of the flow rate of polymer product from the polymer feeding vessel (102) to the hopper (112), and based on a recipe for the pellet composition which recipe was previously implemented in computing unit (118).

The amounts of polymer product, additives and carbon black masterbatch fed into the hopper (112) are transferred into the extruder device (113) and therein molten and homogenized. The melt is conveyed to a cutting chamber (130) in which the polymer pellets are formed.

For producing natural color polymer pellets, carbon black separation valve (150) is closed and the cutting chamber (130) is filled with process water which is provided by a pump (131), passed through a heat exchanger (132) and then transferred into the cutting chamber (130) via a water transportation pipe (133), a three-way valve (151) and a water transportation pipe (152). The pellet-water mixture obtained within the cutting chamber (130) is withdrawn from the cutting chamber (130) and transferred via a pellet-water transportation pipe (153), a three-way valve (154) and a pellet-water transportation pipe (134) to a centrifugal drier (135) in which the polymer pellets are separated from the process water. The separated process water is collected in a water tank (136) and then recycled to the cutting chamber (130) by pump (131) via the water transportation pipe (133), the three-way valve (151) and the water transportation pipe (152).

The separated dry polymer pellets are sieved within a classifying screen (137) to remove small pellets and agglomerates, and are then conveyed by air, which has been compressed by a compressor (138), through a pneumatic transport line (139) into a pellet silo (142). The polymer pellets can then be withdrawn from the bottom of pellet silo (142) via a line (143) and a rotary feeder (144) to a packaging section (not shown) for natural grades.

For producing black color polymer pellets, carbon black separation valve (150) is open and carbon black masterbatch is fed via line (127) to the hopper (112) of the extruder device (113). The cutting chamber (130) is filled with process water which is provided by a pump (181), passed through a heat exchanger (182) and then transferred into the cutting chamber (130) via a water transportation pipe (183), a three-way valve (151) and a water transportation pipe (152). The pellet-water mixture obtained within the cutting chamber (130) is withdrawn from the cutting chamber (130) and transferred via a pellet-water transportation pipe (153), a three-way valve (154) and a pellet-water transportation pipe (184) to a centrifugal drier (185) in which the polymer pellets are separated from the process water. The separated process water is collected in a water tank (186) and then recycled to the cutting chamber (130) by pump (181) via the water transportation pipe (183), the three-way valve (151) and the water transportation pipe (152).

The separated dry polymer pellets are sieved within a classifying screen (187) to remove small pellets and agglomerates, and are then conveyed by air, which has been compressed by compressor (188), through a pneumatic transport line (189), a three-way valve (190) and a pneumatic transport line (191) into a pellet silo (192). The polymer pellets can then be withdrawn from the bottom of pellet silo (192) via a line (193) and a rotary feeder (194) to a packaging section (not shown) for black grades.

For changing from the production of natural color polymer pellets to the production of black color polymer pellets, the feeding of polymer product and additives through line (111) and one or more lines (122) to the hopper (112) and the operations of the extruder device (113), of the pump (131), of the centrifugal drier (135) and of the compressor (138) are stopped, the pelletizing in the cutting chamber (130) is terminated, the positions of three-way valves (151) and (154) are switched and the carbon black separation valve (150) is opened. Shortly thereafter, feeding of polymer product and additives through line (111) and one or more lines (122) and feeding of carbon black masterbatch through line (127) to the hopper (112) and the operations of the extruder device (113), of the pump (181), of the centrifugal drier (185) and of the compressor (188) are started, the pelletizing in the cutting chamber (130) is resumed and the three-way valve (190) is brought to a position that the polymer pellets conveyed through pneumatic transport line (189) are directed via line (196) in a transition silo (197). When, after a short period of time, it is insured that the polymer pellets delivered through pneumatic transport line (189) are homogeneously black colored, the position of three-way valve (190) is switched and the polymer pellets are directed through line (191) into the pellet silo (192).

For reworking the polymer pellets collected in transition silo (197) into prime material, the transition polymer pellets are withdrawn from the bottom of transition silo (197) via a line (198) and a rotary feeder (199) and transferred via a line (201) to a rework material feeding vessel (202). During production of black color polymer pellets, a rework material separation valve (205) is opened and transition polymer pellets are withdrawn from the bottom of rework material feeding vessel (202) and conveyed through line (203) to a rotary valve (210) and then further transferred via line (211) to the hopper (112).

For changing from the production of black color polymer pellets to the production of natural color polymer pellets, during the production of the black color polymer pellets, the feeding of carbon black masterbatch through line (127) is stopped, the carbon black separation valve (150) is closed and the three-way valve (190) is brought into a position that the polymer pellets are directed via line (196) into transition silo (197). When it is insured that the polymer pellets transferred through pellet-water transportation pipe (184) to the centrifugal drier (185) are totally uncolored, the feeding of polymer product and additives through line (111) and one or more lines (122) to the hopper (112) and the operations of the extruder device (113), of the pump (181), of the centrifugal drier (185) and of the compressor (188) are stopped, the pelletizing in the cutting chamber (130) is terminated and the positions of three-way valves (151) and (154) are switched. Shortly thereafter, feeding of polymer product and additives through line (111) and one or more lines (122) to the hopper (112) and the operations of the extruder device (113), of the pump (131), of the centrifugal drier (135) and of the compressor (138) are started and the pelletizing in the cutting chamber (130) is resumed.

The polymer pellets collected in transition silo (197) can be reworking into prime material during the next production period of black color polymer pellets of the respective polymer grade by feeding the transition polymer pellets in a small proportion together with polymer product provided via line (111) to the hopper (112).

The present disclosure further provides an apparatus for preparing polymer pellets having differing compositions, comprising
i) an extruder device for forming a polymer melt;
ii) an underwater pelletizing unit for forming polymer pellets within a cutting chamber filled with process water;
iii) two separating units for separating polymer pellets from process water;
vi) two pellet silos for holding polymer pellets, wherein a first of the pellet silos is connected to a first pellet-water separating unit and holds polymer pellets separated from process water in the first pellet-water separating unit and a second of the pellet silos is connected to a second pellet-water separating unit and holds polymer pellets separated from process water in the second pellet-water separating unit;
v) two process water circulation lines for circulating process water in combination with polymer pellets from the cutting chamber to the two pellet-water separating units and recycling the process water from the two pellet-water separating units to the cutting chamber; and
vi) a valve system for controlling the flow of the process water through the two process water circulation lines in a way that the pellet-water mixture withdrawn from the cutting chamber is either directed to the first pellet-water separating unit and the process water is then recycled from the first pellet-water separating unit to the cutting chamber or the pellet-water mixture withdrawn from the cutting chamber is directed to the second pellet-water separating unit and the process water is recycled from the second pellet-water separating unit to the cutting chamber.

In a preferred embodiment, the apparatus further comprises
vii) a transition pellet silo for holding transition pellets which is equipped with a conveying system for recycling the transition pellets withdrawn from the transition pellet silo to the extruder device.

Preferably, the valve system comprises a first three-way valve attached to a first pellet-water transportation pipe for transferring the pellet-water mixture to the first pellet-water separating unit and attached to a second pellet-water transportation pipe for transferring the pellet-water mixture to the second pellet-water separating unit, wherein the first three-way valve is further attached to third pellet-water transportation pipe for withdrawing the pellet-water mixture from the cutting chamber, and the valve system comprises a second three-way valve attached to a first process water transportation pipe for recycling process water from the first pellet-water separating unit and attached to a second process water transportation pipe for recycling process water from the second pellet-water separating unit, wherein the second three-way valve is further attached to a third process water transportation pipe for recycling process water to the cutting chamber.

The present disclosure also provides a process for transitioning from preparing polymer pellets having a first pellet composition from a first combination of feed materials to preparing polymer pellets having a second pellet composition from a second combination of feed materials in the apparatus of the present disclosure comprising changing the supply of feed materials from supplying the first combination of feed materials to supplying the first combination of feed materials to the extruder device and changing the flow of the process water in a way that the pellet-water mixture withdrawn from the cutting chamber, which had been directed to a first pellet-water separating unit for preparing the polymer pellets having the first pellet composition, is directed to the second pellet-water separating unit.

In a preferred embodiment of the present disclosure, the apparatus is employed in processes for the preparation polyolefins. Polyolefins are preferably prepared by polymerizing olefins and especially 1-olefins at temperatures from 20 to 200°C and pressures of from 0.1 to 20 MPa in the presence of a polymerization catalyst in a polymerization reactor or by polymerizing olefins and especially 1-olefins at temperatures from 100 to 350°C and pressures of from 110 to 500 MPa in the presence of a free-radical polymerization initiator in a polymerization reactor. The polyolefin product obtained by the polymerization, which may be a polyolefin powder or a poly olefin fluff or which maybe a polyolefin melt is supplied to the apparatus, together with one or more additives, and therein transformed into polyolefin pellets.

The present disclosure accordingly also provides a process for the preparation of a polyolefin by polymerizing olefins in a polymerization reactor, supplying the obtained polyolefin product together with one or more additives to an apparatus according to the present disclosure and forming polyolefins pellets.

## Claims

1. A process for preparing polymer pellets having differing compositions, comprising the steps of,
for a first period of time,
a) supplying a first combination of feed materials comprising a polymer product and one or more additives to an extruder device and forming a first polymer melt having a first melt composition,
b) transferring the first polymer melt into an underwater pelletizing unit, which comprises a cutting chamber and operates with process water flowing in a closed loop, and forming first polymer pellets having a first pellet composition within the cutting chamber filled with process water, wherein a first pellet-water mixture is obtained,
c) transferring the first pellet-water mixture through a first pellet-water transportation pipe into a first pellet-water separating unit and separating the first polymer pellets from the process water,
d) withdrawing the separated first polymer pellets from the first pellet-water separation unit and transferring the first polymer pellets into a first pellet silo, and
e) recycling the separated process water from the first pellet-water separation unit through a first process water transportation pipe to the cutting chamber; and
thereafter
f) disconnecting the first pellet-water separation unit from the underwater pelletizing unit and connecting the underwater pelletizing unit to a second pellet-water separation unit; and,
for a second period of time,
g) supplying a second combination of feed materials comprising a polymer product and one or more additives to the extruder device and forming a second polymer melt having a second melt composition which differs from the first melt composition,
h) transferring the second polymer melt into the underwater pelletizing unit and forming second polymer pellets having a second pellet composition within the cutting chamber filled with process water, wherein a second pellet-water mixture is obtained,
i) transferring the second pellet-water mixture through a second pellet-water transportation pipe into a second pellet-water separating unit and separating the second polymer pellets from the process water,
j) withdrawing the separated second polymer pellets from the second pellet-water separation unit and transferring the second polymer pellets to a second pellet silo, and
k) recycling the separated process water from the second pellet-water separation unit through a second process water transportation pipe to the cutting chamber.

2. The process of claim 1, comprising, after the second period of time, the steps of
I) disconnecting the second pellet-water separation unit from the underwater pelletizing unit and connecting the underwater pelletizing unit to the first pellet-water separation unit; and,
for a third period of time, carrying out steps a) to e) again.

3. The process of claim 1, comprising, after the second period of time, the steps of
I) disconnecting the second pellet-water separation unit from the underwater pelletizing unit and connecting the underwater pelletizing unit to the first pellet-water separation unit; and
for a third period of time,
m) supplying a third combination of feed materials comprising a polymer product and one or more additives to an extruder device and forming a third polymer melt having a third melt composition,
n) transferring the third polymer melt into the underwater pelletizing unit and forming third polymer pellets having a third pellet composition within the cutting chamber filled with process water, wherein a third pellet-water mixture is obtained
o) transferring the third pellet-water mixture through the first pellet-water transportation pipe into the first separating unit and separating the third polymer pellets from the process water,
p) withdrawing the separated third polymer pellets from the first separation unit and transferring the third polymer pellets into the first pellet silo or into a third pellet silo, and
q) recycling the separated process water from the first separation unit through the first process water transportation pipe to the cutting chamber.

4. The process of any of claims 1 to 3, comprising either, for an intermediate period of time after the first period of time and before carrying out step f), the steps of
a') supplying the second combination of feed materials comprising a polymer product and one or more additives or an intermediate combination of feed materials comprising a polymer product and one or more additives to the extruder device and forming a transition polymer melt having a transition melt composition,
b') transferring the transition polymer melt into the underwater pelletizing unit and forming transition polymer pellets having a transition pellet composition within the cutting chamber filled with process water, wherein a transition pellet-water mixture is obtained,
c') transferring the transition pellet-water mixture through the first pellet-water transportation pipe into the first separating unit and separating the transition polymer pellets from the process water,
d') withdrawing the separated transition polymer pellets from the first separation unit and transferring the transition polymer pellets into a transition pellet silo, and
e') recycling the separated process water from the first separation unit through the first process water transportation pipe to the cutting chamber; or
comprising, after carrying out step f), for an intermediate period of time before the second period of time, the steps of,
g') supplying the second combination of feed materials comprising a polymer product and one or more additives or an intermediate combination of feed materials comprising a polymer product and one or more additives to the extruder device and forming a transition polymer melt having a transition melt composition,
h') transferring the transition polymer melt into the underwater pelletizing unit and forming transition polymer pellets having a transition pellet composition within the cutting chamber filled with process water, wherein a transition pellet-water mixture is obtained,
i') transferring the transition pellet-water mixture through the second pellet-water transportation pipe into the second separating unit and separating the transition polymer pellets from the process water,
j') withdrawing the separated transition polymer pellets from the second separation unit and transferring the transition polymer pellets to a transition pellet silo, and
k') recycling the separated process water from the second separation unit through the second process water transportation pipe to the cutting chamber.

5. The process of any of claims 1 to 4, wherein the first pellet-water transportation pipe and the first process water transportation pipe are permanently attached to the underwater pelletizing unit and to the first pellet-water separation unit and the second pellet-water transportation pipe and the second process water transportation pipe are permanently attached to the underwater pelletizing unit and to the second pellet-water separation unit and
the disconnecting of the first pellet-water separation unit from the underwater pelletizing unit and the connecting of the underwater pelletizing unit to the second pellet-water separation unit or the disconnecting of the first pellet-water separation from the underwater pelletizing unit and the connecting of the underwater pelletizing unit to the second pellet-water separation unit and the disconnecting of the second pellet-water separation unit from the underwater pelletizing unit and the connecting of the underwater pelletizing unit to the first pellet-water separation unit occur by actuating two or more valves installed in or installed attached to the pellet-water and process water transportation pipes.

6. The process of claim 5, wherein the underwater pelletizing unit has one outlet for a pellet-water mixture and one inlet for process water and the valves are three-way valves and the first pellet-water transportation pipe and the second pellet-water transportation pipe are attached to a first three-way valve which is connected via a third pellet-water transportation pipe with the pellet-water mixture outlet of the underwater pelletizing unit and the first process water transportation pipe and the second process water transportation pipe are attached to a second three-way valve which is connected via a third process water transportation pipe with the process water inlet of the underwater pelletizing unit and
the connecting of the underwater pelletizing unit to and the disconnecting of the first and the second pellet-water separation unit from the underwater pelletizing unit occur by actuating the first and the second three-way valves.

7. The process of any of claims 1 to 6, wherein at least one of the additives comprised in the first combination of feed materials and/or in the second combination of feed materials is a colorant and the polymer pellets having differing compositions are polymer pellets having different colors.

8. The process of claim 7, wherein one of the additives comprised in the first combination of feed materials and/or in the second combination of feed materials is carbon black or a composition comprising carbon black and the carbon black or the composition comprising carbon black is either comprised in the first combination of feed materials or in the second combination of feed materials.

9. The process of any of claims 1 to 8, wherein the combinations of feed materials comprising a polymer product and one or more additives, which are supplied to the extruder device, are first supplied to a mixing device and mixtures of the feed materials are supplied to the extruder device.

10. The process of any of claims 1 to 9, wherein the polymer product is a polyolefin prepared by homopolymerizing a C₂-C₁₀-1-alkene or by copolymerizing two or more C₂-C₁₀-1-alkenes.

11. An apparatus for preparing polymer pellets having differing compositions, comprising
i) an extruder device for forming a polymer melt;
ii) an underwater pelletizing unit for forming polymer pellets within a cutting chamber filled with process water;
iii) two separating units for separating polymer pellets from process water;
iv) two pellet silos for holding polymer pellets, wherein a first of the pellet silos is connected to a first pellet-water separating unit and holds polymer pellets separated from process water in the first pellet-water separating unit and a second of the pellet silos is connected to a second pellet-water separating unit and holds polymer pellets separated from process water in the second pellet-water separating unit;
v) two process water circulation lines for circulating process water in combination with polymer pellets from the cutting chamber to the two pellet-water separating units and recycling the process water from the two pellet-water separating units to the cutting chamber; and
vi) a valve system for controlling the flow of the process water through the two process water circulation lines in a way that the pellet-water mixture withdrawn from the cutting chamber is either directed to the first pellet-water separating unit and the process water is then recycled from the first pellet-water separating unit to the cutting chamber or the pellet-water mixture withdrawn from the cutting chamber is directed to the second pellet-water separating unit and the process water is recycled from the second pellet-water separating unit to the cutting chamber.

12. The apparatus of claim 11, further comprising
vii) a transition pellet silo for holding transition pellets which is equipped with a conveying system for recycling the transition pellets withdrawn from the transition pellet silo to the extruder device.

13. The apparatus of claim 11 or 12, wherein the valve system comprises a first three-way valve attached to a first pellet-water transportation pipe for transferring the pellet-water mixture to the first pellet-water separating unit and attached to a second pellet-water transportation pipe for transferring the pellet-water mixture to the second pellet-water separating unit, wherein the first three-way valve is further attached to third pellet-water transportation pipe for withdrawing the pellet-water mixture from the cutting chamber, and the valve system comprises a second three-way valve attached to a first process water transportation pipe for recycling process water from the first pellet-water separating unit and attached to a second process water transportation pipe for recycling process water from the second pellet-water separating unit, wherein the second three-way valve is further attached to a third process water transportation pipe for recycling process water to the cutting chamber.

14. A process for transitioning from preparing polymer pellets having a first pellet composition from a first combination of feed materials to preparing polymer pellets having a second pellet composition from a second combination of feed materials in the apparatus of claims 11 to 13 comprising changing the supply of feed materials from supplying the first combination of feed materials to supplying the first combination of feed materials to the extruder device and changing the flow of the process water in a way that the pellet-water mixture withdrawn from the cutting chamber, which had been directed to a first pellet-water separating unit for preparing the polymer pellets having the first pellet composition, is directed to the second pellet-water separating unit.

15. A process for the preparation of polyolefins by polymerizing one or more olefins in a polymerization reactor, supplying the obtained polyolefin product together with one or more additives to the apparatus of claims 11 to 13 and forming polyolefins pellets.
